# EUROPÄISCHE PATENTSCHRIFT

(11) **EP 2 413 442 B1**
(45) Veröffentlichungstag und Bekanntmachung des Hinweises auf die Patenterteilung: **12.10.2016**
(21) Anmeldenummer: 11004773.5
(22) Anmeldetag: 10.06.2011
(51) Int. Cl.: H01T 13/54, H01T 21/02, H01T 13/39, H01T 13/46

(54) **Verfahren zum Herstellen einer Zündelektrode für eine Vorkammerzündkerze und Vorkammerzündkerze**
Method for manufacturing an ignition electrode for a pre-chamber spark plug and pre-chamber spark plug
Procédé de fabrication d'une électrode d'allumage pour une bougie d'allumage munie d'une préchambre et bougie d'allumage munie d'une préchambre

(30) Priorität: 27.07.2010 DE 102010032412
(43) Veröffentlichungstag der Anmeldung: 01.02.2012
(73) Patentinhaber: DKT Verwaltungs-GmbH, 74889 Sinsheim (DE)
(72) Erfinder: Kuhnert, Dieter, 74889 Sinsheim (DE); Maul, Georg, 88410 Bad Wurzach (DE); Sailer, Uwe, 74889 Sinsheim (DE)
(74) Vertreter: Mommer, Niels

(56) Entgegenhaltungen:
- EP-A1- 0 675 272
- EP-A2- 2 363 929
- WO-A1-2004/054055
- CH-A- 245 749
- DE-A1- 4 011 630
- DE-T2- 69 703 011

## Beschreibung

Die Erfindung betrifft ein Verfahren zum Herstellen einer mehrere Elektrodenarme aufweisenden Zündelektrode für eine Vorkammerzündkerze sowie eine Vorkammerzündkerze. Ein Verfahren mit den im Oberbegriff des Anspruchs 1 angegebenen Merkmalen sowie eine Vorkammerzündkerze mit den im Oberbegriff des Anspruchs 4 angegebenen Merkmalen sind aus der EP 0 675 272 A1 bekannt.

Eine solche Vorkammerzündkerze hat ein Gehäuse, das an seinem vorderen Ende eine Vorkammer mit mehreren Öffnungen aufweist. Mit einer Bogenentladung kann ein Kraftstoff-Luft-Gemisch in der Vorkammer entzündet werden, so dass aus den Öffnungen der Vorkammer brennendes Gasgemisch als sogenannte Fackelstrahlen austritt und Kraftstoff-Luft-Gemisch im Brennraum eines Motors entzündet.

Aus der CH 245 749 A ist es bekannt, dass beim Biegen oder Falzen von Blechwerkstücken aus harten Metallen eine erhöhte Bruchgefahr besteht, wenn die Richtung einer Biege- oder Falzlinie mit der Walzrichtung des Blechwerkstücks zusammen fällt..

Aus der WO 2004/054055 A1 ist es bekannt, für die Elektrode einer Zündkerze eine Iridiumlegierung zu verwenden.

In dem Gehäuse einer Vorkammerzündkerze ist ein Isolator angeordnet, der eine Mittelelektrode trägt. Die Mittelelektrode wird bei Vorkammerzündkerzen manchmal auch als Elektrodenträger bezeichnet, da sie eine in der Vorkammer angeordnete Zündelektrode trägt. Die Zündelektrode hat mehrere, in der Regel vier, Elektrodenarme, die sich ausgehend von der Mittelelektrode zunächst radial auswärts erstrecken und mit einem anschließenden Abschnitt entlang einer Vorkammerwand verlaufen. Dieser vordere Abschnitt der Elektrodenarme bildet zwischen sich und der Vorkammerwand eine Funkenstrecke für eine Bogenentladung. Die Vorkammerwand kann dabei nach innen gerichtete Vorsprünge, z. B. Noppen, aufweisen, die den Elektrodenarmen zugewandt sind. Die Funkenstrecke für die Bogenentladung ist auch in einem solchen Fall zwischen dem vorderen Abschnitt der Elektrodenarme und der Vorkammerwand, genauer gesagt zwischen Elektrodenarm und Wandvorsprung.

Ein Vorteil von Vorkammerzündkerzen ist ihre im Vergleich zu anderen Zündkerzentypen hohe Lebensdauer und ein sehr gutes Zündverhalten. Diese Vorteile beruhen unter anderem darauf, dass die Zündelektrode mehrere Elektrodenarme aufweist, die jeweils einen Lichtbogen erzeugen können.

Aus der EP 0 675 272 A1 ist es bekannt, die Zündelektrode einer Vorkammerzündkerze aus Metallen der Platingruppe oder Legierungen derselben herzustellen, indem aus Blech ein kreuzförmiger Zündelektrodenrohling mit vier Elektrodenarmen ausgestanzt wird und dessen Arme durch Biegen aufgestellt werden. Platin und Platinbasislegierungen sind hinreichend biegsam, um problemlos eine Herstellung von solchen Zündelektroden als Stanz-Biegeteile zu ermöglichen.

Aufgabe der vorliegenden Erfindung ist es, einen Weg aufzuzeigen, wie sich kostengünstig die Lebensdauer von Vorkammerzündkerzen noch weiter verbessern lässt.

Die Aufgabe wir durch ein Verfahren mit den im Anspruch 1 angegebenen Merkmalen sowie durch eine Vorkammerzündkerze gemäße Anspruch 4 gelöst. Vorteilhafte Weiterbildungen der Erfindung sind Gegenstand von Unteransprüchen.

Erfindungsgemäß wird die Zündelektrode aus Iridium oder einer Iridiumbasislegierung hergestellt. Eine Iridiumbasislegierung ist eine Legierung, die mindestens 50 Gew.-% Iridium enthält. Die Verwendung von Iridiumbasislegierungen ist für Zündkerzen mit einer stiftförmigen Mittelelektrode und einer hakenförmigen Masseelektrode beispielsweise aus der US 6,337,533 bekannt. Elektroden aus Iridiumbasislegierungen haben einen vorteilhaft hohen Schmelzpunkt und deshalb einen vergleichsweise geringen Verschleiß.

Der vorteilhaft hohe Schmelzpunkt von Iridium und Iridiumbasislegierungen ist allerdings mit sehr spröden Materialeigenschaften verknüpft. Für Stift- oder Hakenförmige Elektroden bereit dies keine Probleme, da sich Stifte oder Plättchen aus Iridiumbasislegierungen relativ problemlos als Elektroden montieren lassen. Die aus der EP 0 675 272 A1 bekannte Herstellung von Zündelektroden als Stanz-Biegeteile erfordert jedoch einen Umformschritt, der eine Biegsamkeit des Materials voraussetzt.

Möchte man Zündelektroden für Vorkammerzündkerzen aus einem kreuzförmigen Zündelektrodenrohling herstellen, indem dessen Elektrodenarme durch Biegen aufgerichtet werden, stellt sich bei Verwendung von Iridium oder Iridiumbasislegierungen das Problem, dass Elektrodenarme beim Biegen abbrechen oder an der Biegestelle Risse auftreten, die schon in kurzer Zeit zu einem Ausfall der Zündelektrode führen.

Um die Vorteile von Iridiumbasislegierungen für Zündelektroden von Vorkammerzündkerzen zu nutzen, könnte man daran denken, die problematische Umformung von Blech zu vermeiden. Beispielsweise könnte man ein Elektrodenkreuz aus Runddraht herstellen, da sich Runddraht besser biegen lässt als Blech, oder den Umformschritt vollständig vermeiden, indem die Zündelektrode aus streifenförmigen Abschnitten zusammengefügt oder gegossen wird. Derartige Maßnahmen verursachen jedoch einen erhöhten Fertigungsaufwand.

Durch die erfindungsgemäße Maßnahme, den Zündelektrodenrohling so aus Blech auszuschneiden, dass zwischen jedem der Arme und der Walzrichtung des Blechs ein Winkel von 50° oder weniger ist, kann ohne zusätzlichen Fertigungsaufwand selbst aus spröden Iridiumbasislegierungen eine Zündelektrode hergestellt werden.

Im Rahmen der Erfindung wurde erkannt, dass bei Blech die Biegsamkeit von der Walzrichtung abhängt. Die Walzrichtung ist die Richtung, in der das Blech bei seiner Herstellung gewalzt wird. Es hat sich gezeigt, dass die Biegsamkeit am schlechtesten ist, wenn die Biegeachse parallel zur Walzrichtung ist, d. h. sich ein Elektrodenarm senkrecht zur Walzrichtung erstreckt. Beim Walzen von Blech entsteht eine charakteristische Walztextur, die sich in vielen Fällen bereits mit bloßem Auge an der Oberfläche erkennen lässt. Eine Walztextur zeigt sich aber auch in einer anisotropen Mikrostruktur und/oder der Ausrichtung von Kristallkörnern. Jede Walztextur hat deshalb eine Richtung, nämlich die Walzrichtung.

Bei einem erfindungsgemäßen Verfahren wird deshalb die Kontur eines aus dem Blech auszuschneidenden Zündelektrodenrohlings in Bezug auf die Walzrichtung so ausgerichtet, dass zwischen jedem der Elektrodenarme und der Walzrichtung ein Winkel von 50° oder weniger ist. Beispielsweise kann bei einem erfindungsgemäßen Verfahren zunächst die Walzrichtung eines Blechs ermittelt und anschließend ein Schneidwerkzeug zum Ausschneiden des Zündelektrodenrohlings in Bezug auf die Walzrichtung so ausgerichtet werden, zwischen jedem der auszuschneidenden Elektrodenarme und der Walzrichtung ein Winkel von 50° oder weniger ist.

Indem beim Ausschneiden des Zündelektrodenrohlings die Walzrichtung beachtet wird, lässt sich die zum Aufrichten der Elektrodenarme erforderliche Biegsamkeit selbst bei rechtwinklig zueinander angeordneten Elektrodenarmen erreichen. Wenn nämlich die Walzrichtung als Winkelhalbierenden zwischen rechtwinklig zu einander angeordneten Elektrodenarmen verläuft, ist zwischen jedem der Arme und der Walzrichtung ein Winkel von nur 45°. Für einen Zündelektrodenrohling mit rechtwinklig zueinander angeordneten Elektrodenarmen ist ein Winkel zwischen jedem der Arme und der Walzrichtung ein Winkel von 45° optimal. Winkel von bis zu 50° ermöglichen in der Regel aber immer noch eine ausreichende Biegsamkeit der Elektrodenarme.

Die Biegsamkeit der Elektrodenarme lässt sich weiter verbessern, indem der Winkel zwischen jedem der Arme und der Walzrichtung noch weiter reduziert wird. Bevorzugt ist insbesondere, dass zwischen jedem der Elektrodenarme und der Walzrichtung ein Winkel von 35° oder weniger ist, vorzugsweise 30° oder weniger ist. Dies lässt sich dadurch erreichen, dass der Zündelektrodenrohling nicht als rechtwinkliges Kreuz ausgeschnitten wird, sondern die Form eines Kreuzes hat, das aus zwei sich unter einem Winkel von weniger als 90° schneidenden Streifen gebildet ist. Beispielsweise kann der Zündelektrodenrohling die Form eines Kreuzes haben, das durch zwei Streifen gebildet ist, die sich unter einem Winkel von beispielsweise 60° oder weniger schneiden. Bevorzugt ist der Zündelektrodenrohling so ausgeschnitten, dass zwischen jedem der Elektrodenarme und der Walzrichtung ein Winkel von 30° oder weniger ist.

Bevorzugt wird als Material für die Zündelektrode eine Iridiumbasislegierung verwendet, die wenigstens 70% Gew.-%, besonders bevorzugt wenigstens 80% Gew.-%, insbesondere wenigstens 90% Gew.-% Iridium enthält. Beispielsweise kann eine Iridiumbasislegierung mit 95 Gew.-% Iridium oder mehr verwendet werden. Iridiumbasislegierungen mit einem hohen Iridiumanteil haben einen vorteilhaft hohen Schmelzpunkt. Zur Verbesserung der chemischen Beständigkeit kann der Iridiumbasislegierungen Osmium und/oder Hafnium beigemischt werden. Vorteilhaft sind Iridiumbasislegierungen, die wenigstens 1 Gew.-%, vorzugsweise wenigstens 2 Gew.-%, Osmium und/oder Hafnium enthalten. Eine solche Iridiumbasislegierung enthält also wenigstens 1 Gew.-%, vorzugsweise wenigstens 2 Gew.-% eines Legierungszusatzes, der vollständig aus Osmium oder vollständig aus Hafnium oder vollständig aus einer Osmium-Hafnium-Mischung besteht. Der Iridiumbasislegierung können weitere Legierungszusätze beigemischt sein, insbesondere Rhenium und/oder Molybdän und beispielsweise 0,5 bis 2 Gew.-% Rhenium und/oder 0,5 bis 1 Gew.-% Molybdän.

Bevorzugt hat das Blech, aus dem der Zündelektrodenrohling ausgeschnitten wird, eine Blechdicke von 0,1 bis 0,5 mm.

Der Zündelektrodenrohling kann beispielsweise durch Stanzen, Funkenerosion oder Laserstrahlschneiden aus dem Blech ausgeschnitten werden. Bei einem ausgestanzten Zündelektrodenrohling werden die Elektrodenarme bevorzug in Stanzrichtung aufgestellt. Auf diese Weise lässt sich eine Beeinträchtigung des Umformprozesses durch eventuell vorhandene Grate minimieren.

Die Walztextur einer erfindungsgemäß hergestellten Zündelektrode kann unter Umständen durch eine Glühbehandlung zum Verschwinden gebracht werden. Die vorliegende Erfindung betrifft deshalb auch eine Vorkammerzündkerze mit einem Gehäuse, das an seinem vorderen Ende eine Vorkammer mit mehreren Öffnungen aufweist, einem in dem Gehäuse angeordneten Isolator, einer von dem Isolator umgebenen Mittelelektrode, die eine in der Vorkammer angeordnete Zündelektrode trägt, die mehrere Elektrodenarme aus Blech aufweist, wobei die Elektrodenarme jeweils einen hinteren Abschnitt, der sich quer zur Längsrichtung der Mittelelektrode erstreckt, und einen entlang einer Vorkammerwand verlaufenden vorderen Abschnitt, der zwischen sich und der Vorkammerwand eine Funkenstrecke bildet, aufweisen, wobei zwischen benachbarten Elektrodenarmen jeweils ein Winkel eingeschlossen ist, der um wenigstens 20°, vorzugsweise wenigstens 30°, von einem rechten Winkel abweicht.

Weitere Einzelheiten und Vorteile der vorliegenden Erfindung werden an Ausführungsbeispielen unter Bezugnahme auf die beigefügten Zeichnungen erläutert. Gleiche und einander entsprechende Teile sind dabei mit übereinstimmenden Bezugszahlen bezeichnet. Es zeigen:
- Figur 1: ein Ausführungsbeispiel einer Vorkammerzündkerze;
- Figur 2: die Zündelektrode der in Figur 1 gezeigten Vorkammerzündkerze;
- Figur 3: ein Ausführungsbeispiel eines Zündelektrodenrohlings, aus dem die in Figur 2 dargestellten Zündelektrode hergestellt ist;
- Figur 4: ein weiteres Ausführungsbeispiel eines erfindungsgemäßen Zündelektrodenrohlings;
- Figur 5: eine aus dem in Figur 4 dargestellten Zündelektrodenrohling hergestellte Zündelektrode; und
- Figur 6: ein weiteres Ausführungsbeispiel eines Zündelektrodenrohlings.

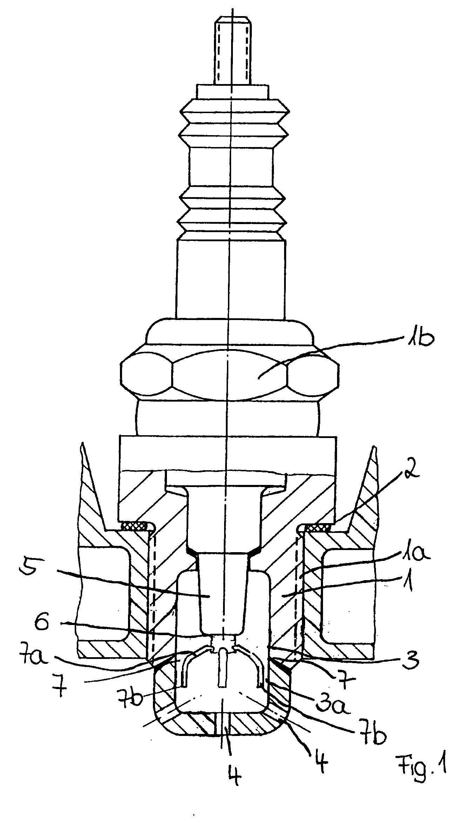

In Figur 1 ist ein Ausführungsbeispiel einer Vorkammerzündkerze des Blechs eingeschraubt in den Zylinderkopf eines Motors dargestellt. Die Vorkammerzündkerze hat ein Gehäuse 1 mit einem Einschraubgewinde 1 a und einem Sechskant 1 b. Zwischen dem Gehäuse 1 und dem Zylinderkopf ist eine Unterlegscheibe 2 als Dichtung verpresst.

Das Gehäuse 1 weist an seinem vorderen Ende eine Vorkammer 3 mit mehreren Öffnungen 4 auf. In dem Gehäuse 1 ist ein Isolator 5, beispielsweise aus Aluminiumoxid oder einem anderen keramischen Werkstoff, angeordnet, der eine Mittelelektrode 6 umgibt. Die Mittelelektrode 6 trägt eine in der Vorkammer 3 angeordnete Zündelektrode, die mehrere Elektrodenarme 7 aufweist. Die Elektrodenarme 7 haben jeweils einen hinteren Abschnitt 7a, der sich von der Mittelelektrode 6 radial auswärts erstreckt, und einen entlang einer seitlichen Vorkammerwand 3a verlaufenden vorderen, nach vorne gerichteten Abschnitt 7b, der zwischen sich und der Vorkammerwand 3a eine Funkenstrecke bildet.

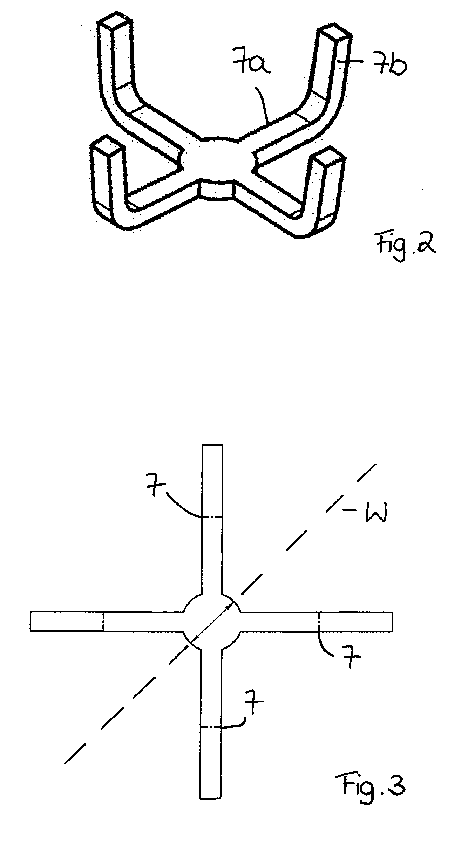

Bei dem dargestellten Ausführungsbeispiel hat die Zündelektrode vier kreuzförmig angeordnete Elektrodenarme 7. Die Zündelektrode ist in Figur 2 gesondert dargestellt und besteht aus einer Iridiumbasislegierung. Zur Herstellung der Zündelektrode wird zunächst durch Walzen in einer einzigen Walzrichtung ein Blech hergestellt und dann aus dem Blech ein Zündelektrodenrohling ausgeschnitten. Ein Beispiel eines Zündelektrodenrohlings ist in Fig. 3 dargestellt.

Wichtig ist dabei, dass beim Ausschneiden des Zündelektrodenrohlings die Walzrichtung beachtet wird. Die Walzrichtung lässt sich bei Blechen in der Regel mit bloßem Auge feststellen, da die Blechoberfläche typischer Weise eine in Walzrichtung verlaufende Textur aufweist. Die Walzrichtung von Blech zeigt sich aber auch an der Mikrostruktur des Materials und/oder der Orientierung der Kristallkörner. Durch das Walzen von Blech entsteht nämlich eine sogenannte Walztextur, die eine Richtung, nämlich die Walzrichtung, hat.

Zur Herstellung eines Zündelektrodenrohlings wird zunächst die Walzrichtung des Blechs ermittelt und anschließend der Zündelektrodenrohling so aus dem Blech ausgeschnitten, dass zwischen jedem der Elektrodenarme 7 und der Walzrichtung ein Winkel von 45° oder weniger ist. Die Walzrichtung ist in Figur 3 als Linie W angedeutet. Ersichtlich ist zwischen jedem der Elektrodenarme 7 und der Walzrichtung W ein Winkel von 45°.

Nach dem Ausschneiden des Zündelektrodenrohlings kann dieser geglüht werden, um Spannungen zu lösen. Erforderlich ist ein Glühschritt aber nicht.

Aus dem Elektrodenrohling wird dann eine Zündelektrode hergestellt, indem die Elektrodenarme 7 durch Biegen aufgestellt werden. Das Biegen kann während einer Glühung vorgenommen werden oder bei Raumtemperatur erfolgen.

Bevorzugt werden die Elektrodenarme 7 dabei nicht senkrecht aufgerichtet, sondern der vordere Abschnitt 7b der Elektrodenarme 7 im Bezug auf den hinteren Abschnitt 7a nur um einen spitzen Winkel gebogen, beispielsweise um einen Winkel von 82° bis 88°. Auf diese Weise lässt sich einerseits die Biegebelastung reduzieren und andererseits besonders vorteilhaft der für eine Funkenstrecke zwischen dem vorderen Abschnitt 7b der Elektrodenarme 7 und einer umgebenden Vorkammerwand benötigte Abstand erreichen. Der Biegeradius sollte nicht zu klein gewählt werden, um die Biegebelastung möglichst zu reduzieren. Günstig ist es, wenn die Elektrodenarme 7 zwischen dem hinteren Abschnitt 7a und dem vorderen Abschnitt 7b einen Biegeradius von mindestens 1 mm und höchstens 3 mm aufweisen. Die Dicke des zur Herstellung der Zündelektrode verwendeten Blechs sollte kleiner als die Breite der Elektrodenarme 7 sein. Geeignet sind beispielsweise Blechstärken zwischen 0,1 und 0,5 mm.

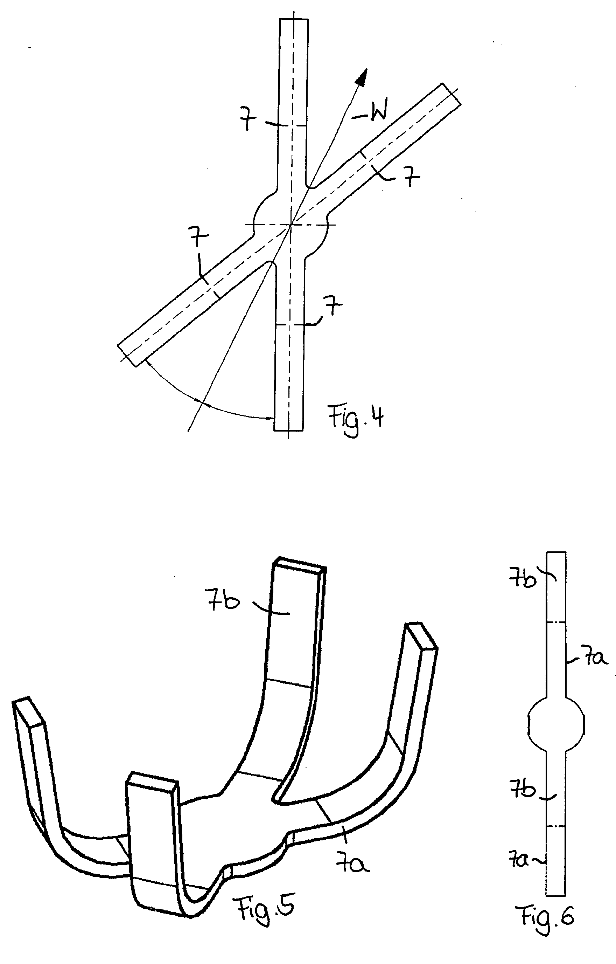

Figur 4 zeigt ein weiteres Ausführungsbeispiel eines Zündelektrodenrohlings. Der in Figur 4 dargestellte Zündelektrodenrohling unterscheidet sich von dem vorstehend beschriebenen Zündelektrodenrohling nur dadurch, dass die vier Elektrodenarme 7 nicht rechtwinklig zueinander angeordnet sind. Bei dem in Figur 4 dargestellten Ausführungsbeispiel weichen die Winkel zwischen benachbarten Elektrodenarmen 7 jeweils um mehr als 30° von einem rechten Winkel ab. Bei dem in Figur 4 dargestellten Ausführungsbeispiel ist deshalb zwischen jedem der Elektrodenarme 7 und der Walzrichtung W ein Winkel von weniger als 35°, vorzugsweise weniger als 30°.

Figur 6 zeigt ein weiteres Ausführungsbeispiel eines Zündelektrodenrohlings. Die Besonderheit dieses Zündelektrodenrohlings besteht darin, dass er nur zwei Elektrodenarme 7 aufweist. Die Walzrichtung kann deshalb mit den Elektrodenarmen 7 einen besonders kleinen Winkel einschließen, insbesondere kann die Walzrichtung parallel zu den Elektrodenarmen 7 verlaufen. Aus einem solchen Zündelektrodenrohling kann eine Zündelektrode mit nur zwei Elektrodenarmen 7 hergestellt werden. Möglich ist es auch, für eine Zündelektrode zwei derartige Zündelektrodenrohlinge zu verwenden, die nach Aufrichten der Elektrodenarme 7 aufeinander montiert werden, beispielsweise aufeinander geschweißt werden.

Die Zündelektrode kann auf die Mittelelektrode 6 aufgeschweißt werden. Eine besonders zuverlässige Befestigung an der Mittelelektrode 6 lässt sich dadurch erreichen, dass die Zündelektrode in die Mittelelektrode 6 eingebettet wird. Dazu wird das Material der Mittelelektrode 6 aufgeschmolzen und die Zündelelektrode in das aufgeschmolzene Material der Mittelelektrode 6 gedrückt. Die Zündelektrode kann auf diese Weise fest von der Mittelelektrode gehalten werden, idealerweise sogar formschlüssig gehalten werden. Die Zündelektrode wird dabei so weit in die Mittelelektrode 6 hineingedrückt, dass die Elektrodenarme 7 aus einer Seitenfläche der Mittelelektrode 6 austreten. Im Gegensatz zu einem Schweißverfahren ist es bei einer solchen Befestigung der Zündelektrode an der Mittelelektrode 6 nicht erforderlich, dass Material der Zündelektrode aufgeschmolzen wird.

### Bezugszeichen

- 1: Gehäuse
- 1 a: Einschraubgewinde
- 1b: Sechskant
- 2: Unterlegscheibe
- 3: Vorkammer
- 3a: Vorkammerwand
- 4: Öffnung
- 5: Isolator
- 6: Mittelelektrode
- 7: Elektrodenarme
- 7a: hinterer Abschnitt
- 7b: vorderer Abschnitt

- W: Walzrichtung

## Patentansprüche

1. Verfahren zum Herstellen einer mehrere Elektrodenarme (7) aufweisenden Zündelektrode für eine Vorkammerzündkerze, wobei aus einem Blech ein Zündelektrodenrohling ausgeschnitten wird und danach die Elektrodenarme (7) durch Biegen aufgestellt werden, **dadurch gekennzeichnet, dass** das Blech durch Walzen in einer Walzrichtung aus Iridium oder einer Iridiumbasislegierung hergestellt wird, und
der Zündelektrodenrohling so ausgeschnitten wird, dass zwischen jedem der Elektrodenarme (7) und der Walzrichtung (W) ein Winkel von 50° oder weniger ist.

2. Verfahren nach Anspruch 1, **dadurch gekennzeichnet, dass** der Zündelektrodenrohling so ausgeschnitten wird, dass zwischen jedem der Elektrodenarme (7) und der Walzrichtung (W) ein Winkel von 30° oder weniger ist.

3. Verfahren nach einem der vorstehenden Ansprüche, **dadurch gekennzeichnet, dass** der Zündelektrodenrohling durch Ausstanzen aus dem Blech ausgeschnitten wird und die Elektrodenarme (7) in Stanzrichtung aufgestellt werden.

4. Vorkammerzündkerze mit
einem Gehäuse (1), das an seinem vorderen Ende eine Vorkammer (3) mit mehreren Öffnungen (4) aufweist,
einem in dem Gehäuse (1) angeordneten Isolator,
einer von dem Isolator (5) umgebenen Mittelelektrode (6), die eine in der Vorkammer (3) angeordnete Zündelektrode trägt, die mehrere Elektrodenarme (7) aus Blech aufweist, wobei die Elektrodenarme (7) jeweils einen hinteren Abschnitt (7a), der sich quer zur Längsrichtung der Mittelelektrode (6) erstreckt, entlang einer Vorkammerwand (3a) verlaufenden vorderen Abschnitt (7b), der zwischen sich und der Vorkammerwand (3a) oder zwischen sich und einem Vorsprung der Vorkammerwand eine Funkenstrecke bildet, aufweisen, **dadurch gekennzeich-net,** dass
die Zündelektrode aus Iridium oder einer Iridiumbasislegierung ist und
die Elektrodenarme (7) jeweils eine Walztextur aufweisen, deren Richtung mit der Längsrichtung des jeweiligen Elektrodenarms (7) einen Winkel von 50° oder weniger, vorzugsweise 35° oder weniger, einschließt.

5. Vorkammerzündkerze nach Anspruch 4, **dadurch gekennzeichnet, dass** die Zündelektrode aus zwei oder mehr Blechstreifen besteht, die sich kreuzend aufeinander liegen.

6. Vorkammerzündkerze nach Anspruch 4 oder 5, **dadurch gekennzeichnet, dass** zwischen benachbarten Elektrodenarmen (7) jeweils ein Winkel eingeschlossen ist, der um wenigstens 20°, vorzugsweise wenigstens 30°, von einem rechten Winkel abweicht.

7. Vorkammerzündkerze nach einem der Ansprüche 4 bis 6, **dadurch gekennzeichnet, dass** die Zündelektrode aus einer Iridiumbasislegierung ist, die wenigstens 70 Gew.-%, besonders bevorzugt wenigstens 90 Gew.-%, insbesondere wenigsten 95 Gew.-% Iridium enthält.

8. Vorkammerzündkerze nach einem der Ansprüche 4 bis 7, **dadurch gekennzeichnet, dass** die Zündelektrode aus einer Iridiumbasislegierung ist, die wenigstens 1 Gew.-%, vorzugsweise wenigstens 2 Gew.-%, Osmium und/oder Hafnium enthält.

9. Vorkammerzündkerze nach einem der Ansprüche 4 bis 8, **dadurch gekennzeichnet, dass** die Elektrodenarme (7) zwischen dem hinteren Abschnitt (7a) und dem vorderen Abschnitt (7b) einen Biegeradius von mindestens 1 mm und höchstens 3 mm aufweisen.

10. Vorkammerzündkerze nach einem der Ansprüche 4 bis 9, **dadurch gekennzeichnet, dass** der vordere Abschnitt (7b) der Elektrodenarme (7) in Bezug auf den hinteren Abschnitt (7a) um einen spitzen Winkel gebogen ist, vorzugsweise um einen Winkel von 82° bis 88°.

## Claims

1. A method for producing an ignition electrode for a prechamber spark plug, which ignition electrode has a plurality of electrode arms (7), wherein an ignition electrode blank is cut out from a metal sheet and the electrode arms (7) are then erected by bending, **characterised in that** the metal sheet is produced by rolling in a rolling direction from iridium or an iridium base alloy, and
the ignition electrode blank is cut out such that an angle of 50° or less is provided between each of the electrode arms (7) and the rolling direction (W).

2. The method according to claim 1, **characterised in that** the ignition electrode blank is cut out such that an angle of 30° or less is provided between each of the electrode arms (7) and the rolling direction (W).

3. The method according to either one of the preceding claims, **characterised in that** the ignition electrode blank is cut out from the metal sheet by stamping and the electrode arms (7) are erected in the stamping direction.

4. A prechamber spark plug comprising
a housing (1), which at its front end has a prechamber (3) with a plurality of openings (4),
an insulator arranged in the housing (1),
a middle electrode (6) surrounded by the insulator (5), said middle electrode supporting an ignition electrode arranged in the prechamber (3), said ignition electrode comprising a plurality of electrode arms (7) made of sheet metal, wherein the electrode arms (7) each have a rear portion (7a), which extends transversely to the longitudinal direction of the middle electrode (6), a front portion (7b), which runs along a prechamber wall (3a) and forms a spark gap between itself and the prechamber wall (3a) or between itself and a prechamber wall protrusion,**characterised in that**
the ignition electrode is made of iridium or an iridium base alloy, and
the electrode arms (7) each have a rolling texture, the direction of which encloses an angle of 50° or less, preferably 35° or less, together with the longitudinal direction of the particular electrode arm (7).

5. The prechamber spark plug according to claim 4, **characterised in that** the ignition electrode consists of two or more sheet metal strips lying on top of one another in an intersecting manner.

6. The prechamber spark plug according to claim 4 or 5, **characterised in that** an angle which deviates from a right angle by at least 20°, preferably at least 30°, is enclosed between each of the adjacent electrode arms (7).

7. The prechamber spark plug according to any one of claims 4 to 6, **characterised in that** the ignition electrode is made of an iridium base alloy containing at least 70 % by weight, particularly preferably at least 90 % by weight, in particular at least 95 % by weight.

8. The prechamber spark plug according to any one of claims 4 to 7, **characterised in that** the ignition electrode is made of an iridium base alloy containing at least 1 % by weight, preferably at least 2 % by weight, osmium and/or hafnium.

9. The prechamber spark plug according to any one of claims 4 to 8, **characterised in that** the electrode arms (7) have a radius of bend of at least 1 mm and at most 3 mm between the rear portion (7a) and the front portion (7b).

10. The prechamber spark plug according to any one of claims 4 to 9, **characterised in that** the front portion (7b) of the electrode arms (7) is bent at an acute angle, preferably at an angle of from 82° to 88° with respect to the rear portion (7a).

## Revendications

1. Procédé de fabrication d'une électrode d'allumage présentant plusieurs bras d'électrode (7) pour une bougie d'allumage munie d'une préchambre, où une ébauche d'électrode d'allumage est découpée à partir d'une tôle et ensuite les bras d'électrodes (7) sont élaborés par un pliage, **caractérisé en ce que** la tôle est fabriquée en iridium ou dans un alliage à base d'iridium par un laminage dans un sens de laminage, et
l'ébauche d'électrode d'allumage est découpée de telle manière qu'il y ait un angle de 50° ou moins entre chacun des bras d'électrode (7) et le sens de laminage (W).

2. Procédé selon la revendication 1, **caractérisé en ce que** l'ébauche d'électrode d'allumage est découpée de telle manière qu'il y ait un angle de 30° ou moins entre chacun des bras d'électrode (7) et le sens de estampage (W).

3. Procédé selon l'une des revendications précédentes, **caractérisé en ce que** l'ébauche d'électrode d'allumage est découpée par estampage de la tôle et les bras d'électrodes (7) sont orientés dans le sens de laminage.

4. Bougie d'allumage munie d'une préchambre avec
un boîtier (1) qui présente une préchambre (3) avec plusieurs ouvertures (4) à son extrémité frontale,
un isolateur disposé dans le boîtier (1),
une électrode centrale (6) entourée de l'isolateur (5) qui porte une électrode d'allumage disposée dans la préchambre (3), qui présente plusieurs bras d'électrode (7) en tôle, où les bras d'électrode (7) présentent chacun une section arrière (7a), qui s'étend transversalement à la direction longitudinale de l'électrode centrale (6), une section frontale (7b) s'étendant le long d'une paroi de préchambre (3a), qui forme un intervalle de décharge entre elle et la paroi de la préchambre (3a) ou entre elle et une saillie de la paroi de préchambre, **caractérisée en ce que**
l'électrode d'allumage est en iridium ou dans un alliage d'iridium et
les bras d'électrode (7) présentent chacun une texture de laminage, dont le sens contient un angle de 50° ou moins, de préférence de 35° ou moins, avec la direction longitudinale d'un bras d'électrode (7) respectif.

5. Bougie d'allumage munie d'une préchambre selon la revendication 4, **caractérisée en ce que** l'électrode d'allumage est constituée de deux ou de plusieurs bandes de tôle qui sont posées les unes sur les autres en se croisant.

6. Bougie d'allumage munie d'une préchambre selon la revendication 4 ou 5, **caractérisée en ce qu'**entre des bras d'électrode (7) voisins, chaque fois, un angle est contenu, qui dévie d'au moins 20°, de préférence, d'au moins 30° par rapport à un angle droit.

7. Bougie d'allumage munie d'une préchambre selon l'une des revendications 4 à 6, **caractérisée en ce que** l'électrode d'allumage est constitué d'un alliage à base d'iridium, qui contient au moins 70 % en poids, de manière particulièrement préférée, au moins 90 % en poids, notamment au moins 95 en poids d'iridium.

8. Bougie d'allumage munie d'une préchambre selon l'une des revendications 4 à 7, **caractérisée en ce que** l'électrode d'allumage est constituée d'un alliage à base d'iridium, qui contient au moins 1 % en poids, de préférence au moins 2 % en poids, d'osmium et/ou de hafnium.

9. Bougie d'allumage munie d'une préchambre selon l'une des revendications 4 à 8, **caractérisée en ce que** les bras d'électrodes (7) présentent un rayon de courbure d'au moins 1 mm et d'au plus 3 mm entre la section arrière (7a) et la section frontale (7b).

10. Bougie d'allumage munie d'une préchambre selon l'une des revendications 4 à 9, **caractérisée en ce que** la section frontale (7b) des bras d'électrode (7) est recourbée avec un angle aigu, de préférence avec un angle de 82° à 88° par rapport à la section arrière (7a).
